# EUROPEAN PATENT APPLICATION

(11) **EP 2 469 623 A1**
(43) Date of publication of application: **27.06.2012**
(21) Application number: 10252225.7
(22) Date of filing: 24.12.2010
(51) Int. Cl.: H01M 2/16, B01D 71/26, B01D 67/00

(54) **Polyolefin microporous membrane and separator for lithium ion battery**

(71) Applicant: Takemoto Yushi Kabushiki Kaisha, Gamagori-shi, Aichi-ken 443-8611 (JP)
(72) Inventor: Noda, Ippei, Aichi-Ken (JP)
(74) Representative: Smyth, Gyles Darren

(57) **Abstract**

A polyolefin microporous membrane that may serve as a separator for a lithium ion battery is a single-layer or laminated structure and includes a film that forms a surface layer and contains organosilicone particles.

## Description

### Background of the Invention

This invention relates to a polyolefin microporous membrane and a separator for a lithium ion battery.

Polyolefin microporous membranes are being used as a separator for a lithium ion battery, a precision filter membrane, a separator for a capacitor, and a material for a fuel cell. Use as a separator for a lithium ion cell used for a small-size electronic device such as portable telephones and notebook type personal computers as well as an automobile battery is attracting particular attention. This invention relates to improvements in such polyolefin microporous membranes and separators for a lithium ion battery.

As examples of such polyolefin microporous membranes as described above, Japanese Patent Publication Tokkai 10-50287 disclosed those having a film of the surface layer comprising inorganic powders such as titanium oxide, aluminum oxide and potassium titanate and Patent Publication WO2006-038532 disclosed those having a film of the surface layer containing inorganic particles of oxides and nitrides of silicon, aluminum and titanium.

Since the inorganic powders and particles in these prior art polyolefin microporous membranes hardly have any elasticity for enabling them to follow the drawing process carried out in the molding step for the microporous membrane and since their compatibility with polyolefin is not good, the molding process for the microporous membranes was very cumbersome and the microporous membranes obtained as a result developed various troubles such as pin holes and voids. In particular, the mechanical strength of the resultant microporous membranes is not sufficient and their thermal stability at high temperatures is inferior.

### Summary of the Invention

It is therefore an object of this invention to provide a polyolefin microporous membrane for which the molding operations are easy, being high in mechanical strength when made into a thin film, superior in stability at high temperatures, and hence suitable as a separator for a lithium ion battery, a precision filter membrane, a separator for a capacitor and a material for a fuel cell.

This invention is based on the discovery by the inventor hereof as a result of a diligent research in view of the object described above that a polyolefin microporous membrane that is a single-layer or laminated structure and includes a film forming a surface layer and containing organosilicone particles responds to the object of the invention.

### Brief Description of Drawings

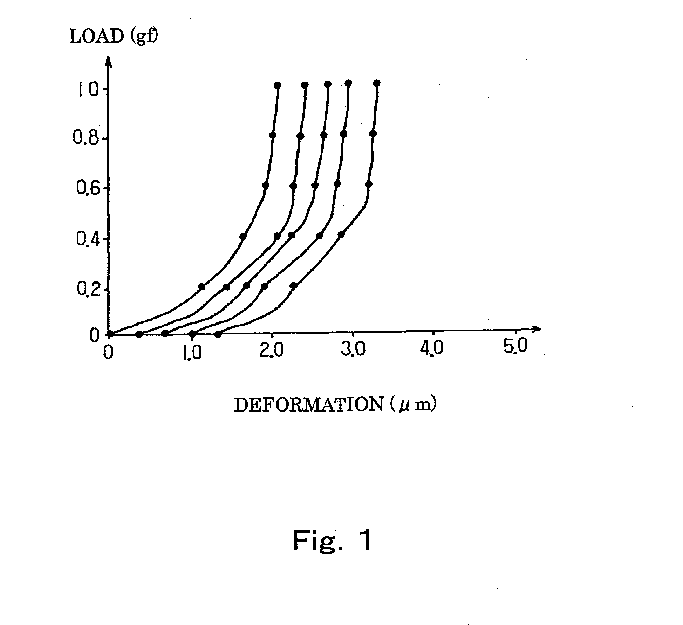

Fig. 1 is a graph that shows deformation-under-load curves obtained when five of organosilicone particles used in the present invention were selected and used on a minute compression tester.

### Detailed Description of the Invention

This invention relates to a polyolefin microporous membrane that is a single-layer or laminated structure and includes a film which forms a continuous surface layer containing organosilicone particles, as well as a separator for a lithium ion battery comprising such a polyolefin microporous membrane.

The polyolefin microporous membrane according to this invention (hereinafter referred to as the microporous membrane of this invention) comprises a single-layer film or a laminated film and includes a film that forms its surface layer and contains organosilicone particles. The average diameter of these organosilicone particles depends on the thickness of the molded microporous membrane but is preferably 0.01 - 10 µm for improving the mechanical strength of the microporous membrane. It is preferable, however, to make it 5µm or less for not adversely affecting the shutdown function of the obtained microporous membrane and also 0.05µm or above for improving dispersing characteristics of the organosilicone particles with polyolefin and the plasticizer, that is, to adjust it to be in the range of 0.05 - 5µm. The average particle diameter is preferably determined using a scanning electron microscope. The average particle diameter is preferably obtained by averaging the particle diameter of 20 arbitrarily selected particles on a scanning electron microscope image of said particles. Preferably, it is a number average.

It is preferable for the organosilicone particles to be uniformly shaped. Spherically shaped ones and those in the shape of a golfball are preferable, and spherical ones are particularly preferable.

Throughout herein, particles with a spherical surface having dimples, or small indentations, formed thereon will be referred to as being golfball-like or having a golfball shape, while particles with a relatively smooth spherical surface without such dimples will be referred to simply as being spherical.

Moreover, organosilicone particles comprising a polysiloxane cross-link structure are preferable, and those comprising either (1) siloxane unit shown by formula R¹SiO_{1.5} or (2) siloxane unit shown by formula R¹SiO_{1.5} and siloxane units selected from the group consisting of siloxane units shown by formulas R²R³SiO and SiO₂ where R¹, R² and R³ each represent an organic group having a carbon atom directly connected to a silicon atom are more preferable.

As explained above, R¹ is an organic group having a carbon atom directly connected to a silicon atom. Examples of such organic group include both (1) those that are not a reactive group or do not have a reactive group and (2) those that are a reactive group or have a reactive group.

When R¹ is an organic group which either is not a reactive group or does not have a reactive group, examples of such an organic group include alkyl group, cycloalkyl group, aryl group, alkyl aryl group, and aralkyl group, but alkyl groups with 1-4 carbon atoms such as methyl group, ethyl group, propyl group and butyl group and phenyl group are preferable and methyl group is more preferable. When R¹ is such an organic group, preferable examples of siloxane unit R¹SiO_{1.5} include methyl siloxane unit, ethyl siloxane unit, propyl siloxane unit, butyl siloxane unit and phenyl siloxane unit.

When R¹ is an organic group which either is a reactive group or has a reactive group, examples of such an organic group include epoxy group, (meth)acryloxy group, alkenyl group, mercaptoalkyl group, aminoalkyl group, haloalkyl group, glyceroxy group, ureide group, and cyano group, but alkyl groups having epoxy group such as 2-glycidoxyethyl group, 3-glycidoxypropyl group, and 2-(3,4-epoxy cyclohexyl) propyl group, (meth)acryloxy groups such as methacryloxy propyl group, and 3-acryloxypropyl group, alkenyl groups such as vinyl group, allyl group, and isopropenyl group, mercaptoalkyl groups such as mercaptopropyl group and mercaptoethyl group, and aminoalkyl groups such as 3-(2-aminoethyl) aminopropyl group, 3-aminopropyl group and N,N-dimethylaminopropyl group are preferable. When R¹ is such an organic group, preferable examples of siloxane unit R¹SiO_{1.5} include (1) siloxane units having epoxy group such as 3-glycidoxy propyl siloxane unit, 2-(3,4-epoxycyclohexyl) ethylsiloxane unit, and 2-glycidoxyethyl siloxane unit, (2) siloxane units having (meth)acryloxy group such as 3-methacryloxy propyl siloxane unit and 3-acryloxypropyl siloxane unit, (3) siloxane units having alkenyl group such as vinyl siloxane unit, allyl siloxane unit, and isopropenyl siloxane unit, (4) siloxane units having mercaptoalkyl group such as mercaptopropyl siloxane unit, and mercaptoethyl siloxane unit, (5) siloxane units having aminoalkyl group such as 3-aminopropyl siloxane unit, 3-(2-aminoethyl) aminopropyl siloxane unit, N,N-dimethylaminopropyl siloxane unit, N,N-dimethylaminopropyl siloxane unit and N,N-dimethylaminoethyl siloxane unit, (6) siloxane units having haloalkyl group such as 3-chloropropyl siloxane unit and trifluoropropyl siloxane unit, (7) siloxane units having glyceroxy group such as 3-glyceroxypropyl siloxane and 2-glyceroxyethyl siloxane unit, (8) siloxane units having ureide group such as 3-ureidopropyl siloxane and 2-ureidoethyl siloxane unit, and (9) siloxane units having. cyano group such as cyanopropyl siloxane unit and cyanoethyl siloxane unit, but siloxane units having epoxy group, siloxane units having (meth)acryloxy group, siloxane unit having alkenyl group, siloxane units having mercaptoalkyl group and siloxane units having aminoalkyl group are particularly preferable.

R² and R³ in siloxane units R²R³SiO are each an organic group having a carbon atom directly connected to a silicon atom. Examples of such organic group include both (1) those that are not a reactive group or do not have a reactive group and (2) those that are a reactive group or have a reactive group.

When R² and R³ are each an organic group which either is not a reactive group or does not have a reactive group, examples of such an organic group are the same as those described above for R¹. When R² and R³ are each such an organic group, examples of preferable siloxane unit R²R³SiO include dimethyl siloxane unit, methylethyl siloxane unit, methylpropyl siloxane unit, methylbutyl siloxane unit, methylphenyl siloxane unit, diethyl siloxane unit, ethylpropyl siloxane unit, ethylbutyl siloxane unit, ethylphenyl siloxane unit, dipropyl siloxane unit, propylbutyl siloxane unit, dibutyl siloxane unit, butylphenyl siloxane unit, and diphenyl siloxane unit.

When R² and R³ are each an organic group which either is a reactive group or has a reactive group, examples of such an organic group are the same as those described above for R¹.

As described above, organosilicone particles comprise a polysiloxane cross-link structure and those comprising either (1) siloxane unit shown by formula R¹ SiO_{1.5}, or (2) siloxane unit shown by formula R¹SiO_{1.5} and siloxane units which are selected from the group consisting of siloxane units shown by formulas R²R³SiO and SiO₂, and in which the molar ratio of siloxane units R¹SiO^{1.5} to the sum of siloxane units R²R³ SiO and SiO₂ is 100/0 - 50/50 are particularly preferable, more preferably 95/5 - 55/45, more preferably 90/10 - 60/40, more preferably 80/20-70/30. If the molar ratio of the sum of siloxane units R²R³SiO and SiO₂ exceeds 50 molar %, the mechanical strength of the obtained microporous membrane tends to be reduced.

The microporous membrane of this invention comprises either a single-layer or laminated film and the film that forms a surface layer includes organosilicone particles such as those described above. There is no particular limitation on the concentration of the organosilicone particles in the film forming a surface layer, but it is preferably 5-60 mass %, more preferably 10 - 50 mass % and even more preferably 15 - 35 mass % by total weight of the film. If this concentration is less than 5 mass %, the effect contributing to the thermal stability at high temperatures becomes reduced. If it exceeds 60 mass %, on the other hand, the mechanical strength tends to become reduced.

Suitable polyolefins for use in the present invention are selected from the group consisting of homopolymers and copolymers of polyethylene, polypropylene, polybutylene and mixtures thereof. Preferably, the film comprises at least one polyethylene, at least one polypropylene, at least one polybutylene or mixtures thereof. Preferably, the film comprises at least one polyethylene. Preferably, the at least one polyethylene is an ultrahigh molecular weight polyethylene, a high molecular weight polyethylene or mixtures thereof. Preferably, the ultrahigh molecular weight polyethylene has a weight average molecular weight of between 1 x 10⁶ and 5 x 10⁶ g/mol, more preferably between 2 x 10⁶ and 3 x 10⁶ g/mol. Preferably, the high molecular weight polyethylene has a weight average molecular weight of between 1 x 10⁵ and 8 x 10⁵ g/mol, more preferably between 2 x 10⁵ and 5 x 10⁵ g/mol. Preferably, the film comprises a mixture of an ultrahigh molecular weight polyethylene and a high molecular weight polyethylene. Preferably, the mixture comprises a mass ratio of high molecular weight polyethylene to ultrahigh molecular weight polyethylene of between 8/1 and 3/1, more preferably, between 6/1 and 4/1.

In another preferred embodiment, the film comprises at least one polypropylene. Preferably, the at least one polypropylene has a weight average molecular weight of between 1 x 10⁵ and 10 x 10⁵ g/mol, more preferably between 2 x 10⁵ and 5 x 10⁵ g/mol. Preferably, the at least one polypropylene has a density of between 0.8 and 1.0 g/cm³.

The thickness of the films of the present invention is not specifically limited. In one embodiment, the surface layer films of the present invention preferably have a thickness between 0.1 and 10 µm, more preferably between 0.5 and 5 µm and more preferably between 1 and 4 µm. In another embodiment, the surface layer films of the present invention preferably have a thickness between 15 and 40 µm, more preferably between 20 and 35 µm and more preferably between 22 and 32 µm.

The membranes of the present invention may be a laminated film. Preferably, at least one of the layers comprises a high density polyethylene. Preferably, an intermediate layer comprises a high density polyethylene. Preferably, the high density polyethylene has a viscosity average molecular weight of between 1 x 10⁵ and 10 x 10⁵ g/mol, more preferably between 2 x 10⁵ and 5 x 10⁵ g/mol. Preferably, the high density polyethylene has a density of between 0.8 and 1.0 g/cm³. A preferred embodiment of the present invention is a membrane comprising at least one surface layer comprising a polypropylene and at least one layer comprising a high density polyethylene.

The microporous membrane of this invention can be produced by a process including the following three steps: Step 1 of inciting and mixing at least polyolefin resin, organosilicone particles and a plasticizer; Step 2 of molding the product of melting and mixing to carry out biaxial stretching; and Step 3 of extracting the plasticizer from biaxially-stretched film and discarding it.

In Step 1, an extruder or the like is used to melt and mix polyolefin resin, organosilicone particles and the plasticizer normally at a temperature of 160 - 300°C.

The plasticizer is preferably an organic compound capable, when mixed with polyolefin, of melting together above its melting point. Examples of such plasticizer include hydrocarbons such as fluidic paraffin and paraffin wax, esters of phthalic acid such as di-2-ethylhexyl phthalate, diheptyl phthalate and dibutyl phthalate, esters of sebacic acid, esters of stearic acid, esters of adipic acid and esters of phosphoric acid. These plasticizers may be used either singly or as a mixture of two or more kinds. The ratio of the plasticizer in the mixture, while being melted and mixed together, is preferably 20 - 80 mass %.

In Step 2, a uniaxial extruder or a biaxial extruder is used to mold the aforementioned melted object being mixed together to further carry out biaxial stretching. Many molding means may be employed here but extrusion molding is preferable wherein the melted object being mixed together is extruded from a molding machine equipped with a sheet die such as a slot die or a T-die and then cooled. If the microporous membrane of this invention comprises a laminated film, such a microporous membrane may be produced (1) by the method of extruding together from a single die or (2) by the method of molding films for forming individual layers from each extruder, stacking them and integrating them by thermal adhesion but the method by co-extrusion is preferable because films with high interlayer adhesive strength and permeability can be obtained with superior productivity.

The biaxial stretching process after the molding process may be either simultaneous or sequential biaxial stretching but the drawing temperature is normally 100 - 135 °C and the drawing magnification is normally 3 - 200 times in area magnification.

In Step 3, the plasticizer is extracted from the biaxially stretched film and discarded. Extraction of the plasticizer is carried out by soaking the biaxially stretched film in an extraction solvent and the film is thereafter sufficiently dried. The extraction solvent is preferably one which is a poor solvent for polyolefin and organosilicone particles and a good solvent for the plasticizer, having a boiling point lower than that of polyolefin. Examples of such extraction solvent include chlorine-type solvents such as methylene chloride and 1,1,1-trichloroethane, ketones such as methylethyl ketone and acetone, organic halogen solvents such as hydrofluorocarbon, hydrofluoroether, ring-forming hydrofluorocarbon, perfluorocarbon and perfluoroether, ethers such as diethylether and tetrahydrofuran, hydrocarbons such as n-hexane and cyclohexane, and alcohols such as methanol and isopropyl alcohol, but methylene chloride is particularly preferable. These extraction solvents may be used singly or in combination of two or more kinds.

After the plasticizer has been extracted, the drawing process may be carried out further, if necessary, for adjusting physical characteristics such as thickness and air resistance. This drawing may be carried out as uniaxial stretching, simultaneous biaxial stretching or sequential biaxial stretching but biaxial stretching and sequential biaxial stretching are preferable. The drawing temperature is usually 100 - 135°C and the drawing magnification is usually 10 times or less in area magnification.

When the microporous membrane of this invention comprises a laminated film, it is preferable that the pores in each layer of the film are three-dimensionally combined to form a three-dimensional network structure and that these three-dimensional structures of the individual layers are mutually connected. Three-dimensional structures are structures having surfaces in a vein state and sponge-like sectional membrane structure as seen from the direction of any arbitrary three-dimensional coordinate axis. In the above, the vein state means a state having fibrils in a network structure. This may be ascertained by observing the surface and taking a sectional view by means of a scanning electron microscope. The fibril diameter of the three-dimensional network structure is preferably 0.01 - 0.1 µm.

Polyolefin microporous membranes according to this invention are superior in mechanical strength and thermal stability at high temperatures and particularly suitable as a separator for a lithium ion battery, for example, those disclosed in JP 10-050287.

Thus, the present invention provides polyolefin microporous membranes that bring about no trouble under good molding operational conditions and are superior particularly in mechanical strength and thermal stability at high temperatures and hence are useful as a separator for a lithium ion battery.

### Examples

The invention is explained next by way of examples but these examples are not intended to limit the scope of the invention. In respect of the polyolefins used in the examples, all densities recited are in g/cm³ and all weight average molecular weights are in g/mol.

The average particle diameter was determined using a scanning electron microscope (SEMEDX TypeN (tradename), HITACHI Ltd.). The average particle size was obtained by averaging the particle size of 20 arbitrarily selected particles on a scanning electron microscope image of said particles. The minute compression tester used was a MCT-W201 (tradename) (Shimadzu Corporation).

### Part I (Synthesis of organosilicone particles)

### Synthesis of organosilicone particles (P-1)

Ion exchange water 700g was placed in a reactor, 48% aqueous solution of sodium hydroxide 0.6g and 20% aqueous solution of α-(p-nonylphenyl)-ω-hydroxy(polyoxyethylene) (the number of oxyethylene units =10) 0.25g were added and a uniform solution was obtained by stirring well. While the temperature of this solution was maintained at 14°C, mixed monomer of methyltrimethoxy silane 122.6g (0.9 mols) and dimethyldimethoxy silane 12.0g (0.1 mol) was gradually dropped in such that the aqueous solution and the monomer layers would not become mixed. After the dropping was finished, it was stirred slowly in a laminar flow condition with both layers maintained. After one hour, 10% aqueous solution of sodium dodecylbenzene sulfonate 3g was added and the mixture was similarly stirred slowly for 3 hours at 14°C. A condensation reaction was continued for 5 hours at 30 - 80°C to obtain an aqueous suspension containing organosilicone particles. After this aqueous suspension was passed through a membrane filter with pore diameter 2µm produced by Advantec MFS, Inc., white particles were separated from the filtered liquid portion by using a centrifugal separator. The separated white particles were washed with water and dried in a heated air stream of 150 °C for 5 hours to obtain organosilicone particles (P-1) 60.1g. Observation by a scanning electron microscope, elemental analysis, inductively coupled plasma spectrometry and FT-IP spectrometry was carried out on organosilicone particles (P-1). As a result, it was determined that organosilicone particles (P-1) were spherical particles with average diameter of 0.3 µm, comprising polysiloxane cross-link structure having siloxane units shown by R¹ SiO_{1.5} and R²R³SiO at molar ratio of 90/10.

### Synthesis of organosilicone particles (P-2)

Ion exchange water 700g was placed in a reactor, 48% aqueous solution of sodium hydroxide 0.6g and 20% aqueous solution of α-(p-nonylphenyl)-ω-hydroxy(polyoxyethylene) (the number of oxyethylene units =10) 0.61g were added and a uniform solution was obtained by stirring well. While the temperature of this solution was maintained at 14°C, mixed monomer of methyltrimethoxy silane 122.6g (0.9 mols) and tetraethoxysilane 20.8g (0.1 mol) was gradually dropped in such that the aqueous solution and the monomer layers would not become mixed. After the dropping was finished, it was stirred slowly in a laminar flow condition with both layers maintained. After one hour, 10% aqueous solution of sodium dodecylbenzene sulfonate 3g was added and the mixture was similarly stirred slowly for 3 hours at 14°C. A condensation reaction was continued for 5 hours at 30 - 80°C to obtain an aqueous suspension containing organosilicone particles. After this aqueous suspension was passed through a membrane filter with pore diameter 2µm produced by Advantec MFS, Inc., white particles were separated from the filtered liquid portion by using a centrifugal separator. The separated white particles were washed with water and dried in a heated air stream of 150 °C for 5 hours to obtain organosilicone particles (P-2) 60.1g. Observation by a scanning electron microscope, elemental analysis, inductively coupled plasma spectrometry and FT-IP spectrometry was carried out on organosilicone particles (P-2). As a result, it was determined that organosilicone particles (P-2) were golfball-like particles with average diameter of 1µm, comprising polysiloxane cross-link structure having siloxane units shown by R¹SiO_{1.5} and SiO₂ at molar ratio of 90/10.

### Synthesis of organosilicone particles (P-3)

Ion exchange water 700g was placed in a reactor, and 48% aqueous solution of sodium hydroxide 0.6g and 20% aqueous solution of α-(p-nonylphenyl)-ω hydroxy(polyoxyethylene) (the number of oxyethylene units =10) 0.21 g were added and a uniform solution was obtained by stirring well. While the temperature of this solution was maintained at 14°C, silicon monomer of methyltrimethoxysilane 136.2g (1 mol) was gradually dropped in such that the aqueous solution and the monomer layers would not become mixed. After the dropping was finished, it was stirred slowly in a laminar flow condition with both layers maintained. After one hour, 10% aqueous solution of dodecylbenzene sulfonic acid sodium 3g was added and the mixture was similarly stirred slowly for 3 hours at 14°C. A condensation reaction was continued for 5 hours at 30-80°C to obtain an aqueous suspension containing organosilicone particles. After this aqueous suspension was passed through a membrane filter with pore diameter 2µm produced by Advantec MFS, Inc., white particles were separated from the filtered liquid portion by using a centrifugal separator. The separated white particles were washed with water and dried in a heated air stream of 150 °C for 5 hours to obtain organosilicone particles (P-3) 60.1 g. Observation by a scanning electron microscope, elemental analysis, inductively coupled plasma spectrometry and FT-IP spectrometry was carried out on organosilicone particles (P-3). As a result, it was determined that organosilicone particles (P-3) were spherical particles with average diameter of 100nm, comprising polysiloxane cross-link structure having siloxane units shown by R¹SiO_{1.5}

### Synthesis of organosilicone particles (P-4)

Ion exchange water 700g was placed in a reactor, and 48% aqueous solution of sodium hydroxide 0.3g was added to prepare an aqueous solution. Methyltrimethoxysilane (0.8 mols) and dimethyldimethoxy silane (0.2 mols) were added to this aqueous solution and hydrolysis reaction was continued for one hour while temperature was maintained at 13 - 15°C. Next, 10% aqueous solution of sodium dodecylbenzene sulfonate 3g was added and hydrolysis reaction was continued for 3 hours at the same temperature to obtain a transparent reaction product containing silanol compound. Next, the temperature of the obtained reaction product was maintained at 30 - 80°C and a condensation reaction was carried out for 5 hours to obtain an aqueous suspension containing organosilicone particles. After this aqueous suspension was passed through a membrane filter with pore diameter 5µm produced by Advantec MFS, Inc., white particles were separated from the filtered liquid portion by using a centrifugal separator. The separated white particles were washed with water and dried in a heated air stream of 150 °C for 5 hours to obtain organosilicone particles (P-4) 60.1g. Observation by a scanning electron microscope, elemental analysis, inductively coupled plasma spectrometry and FT-IP spectrometry was carried out on organosilicone particles (P-4). As a result, it was determined that organosilicone particles (P-4) were spherical particles with average diameter of 2.0µm, comprising polysiloxane cross-link structure having siloxane units shown by R¹SiO_{1.5} and R²R³SiO at molar ratio of 80/20.

Fig. 1 is a graph that shows deformation-under-load curves obtained when five of synthesized organosilicone particles (P-4) were arbitrarily selected and used on a minute compression tester. The vertical axis represents load (gf) and the horizontal axis represents deformation (gm). Fig. 1 shows that organosilicone particles (P-4) are hardly destructable under load variations. The curves have been shifted along the x-axis for clarity, i.e. when under zero strain there is zero deformation for all particles.

### Synthesis of organosilicone particles (P-5)

Ion exchange water 700g was placed in a reactor, and 48% aqueous solution of sodium hydroxide 0.3g was added to prepare an aqueous solution. Methyltrimethoxysilane 81.7g (0.6 mols) and dimethyldimethoxy silane 48.1g (0.4 mols) were added to this aqueous solution and reactions were carried out as for the synthesis of organosilicone particles (P-4). Organosilicone particles (P-5) thus synthesized were spherical particles with average diameter of 2.0µm, comprising polysiloxane cross-link structure having siloxane units shown by R¹SiO_{1.5} and R²R³SiO at molar ratio of 60/40.

### Synthesis of organosilicone particles (P-6)

Ion exchange water 700g was placed in a reactor, 48% aqueous solution of 15 sodium hydroxide 0.6g and 20% aqueous solution of α-(p-nonylphenyl)-ω hydroxy(polyoxyethylene) (the number of oxyethylene units =10) 0.61 g were added and a uniform solution was obtained by stirring well. While the temperature of this solution was maintained at 14°C, mixed monomer of methyltrimethoxysilane 109.0g (0.8 mols), dimethyldimethoxy silane 12.0g (0.1 mol) and tetraethoxysilane 20.8 (0.1 mol) was added to carry out reactions as for the synthesis of organosilicone particles (P-2). Organosilicone particles (P-6) thus synthesized were golfball-like particles with average diameter of comprising polysiloxane cross-link structure having siloxane units shown by R¹Si0_{1.5}, R²R³SiO and SiO₂ at molar ratio of 80/10/10.

Details of these synthesized organosilicone particles are shown together in Table 1.

**Table 1**

| | Shape | Silicon monomer (molar %) | | | Average particle diameter (µm) | Particle composition (molar ratio) | | |
|---|---|---|---|---|---|---|---|---|
| | | MTS | DMS | TEOS | | R¹SiO_{1.5} | R²R³SiO | SiO₂ |
| P-1 | Spherical | 90 | 10 | | 0.3 | 0.9 | 0.1 | |
| P-2 | Golfball-like | 90 | | 10 | 1.0 | 0.9 | | 0.1 |
| P-3 | Spherical | 100 | | | 0.1 | 1.0 | | |
| P-4 | Spherical | 80 | 20 | | 2.0 | 0.8 | 0.2 | |
| P-5 | Spherical | 60 | 40 | | 2.0 | 0.6 | 0.4 | |
| P-6 | Golfball-like | 80 | 10 | 10 | 1.0 | 0.8 | 0.1 | 0.1 |

| | | | | | | | | |
|---|---|---|---|---|---|---|---|---|
| In Table 1: MTS: Methyltrimethoxysilane DMS: Dimethylmethoxy silane TEOS: Tetraethoxysilane | | | | | | | | |

### Part 2 (Production of polyolefin microporous membranes)

### Test Example 1

Polyethylene composition was obtained by adding 0.2 mass parts of antioxidant to ultrahigh molecular weight polyethylene composition with mass average molecular weight of 2.5 x 10⁶ (6 mass parts) and high molecular weight polyethylene composition with mass average molecular weight of 3.5 x 10⁵ (30 mass parts). This polyethylene composition (30.2 mass parts), organosilicone particles (P-1) synthesized in Part 1 (8 mass parts) and bis(p-ethylbenzylidene) sorbitol (2 mass parts) as nucleating agent were placed in a biaxial extruder (58mmφ, L/D=42, strong mixing type). Fluidic paraffin (70 mass parts) was also supplied from the side feeder of this biaxial extruder, and the mixture was melted and mixed together at 200°C at 200rpm, extruded from the T-die attached to the front end of the biaxial extruder and immediately cooled and solidified by a cast roll cooled to 25°C to mold a sheet with thickness of 1.5mm. After this sheet was drawn to 5 x 5 times at 124°C by using a simultaneous biaxial stretching machine, it was soaked in methylene chloride to extract and remove the fluidic paraffin and then dried and a tenter drawing machine was used to draw it 1.5 times in a transverse direction at 125°C. This drawn sheet was thereafter eased at 130°C in the transverse direction for a heat treatment, and a microporous membrane of Test Example 1 comprising a single-layer film was produced.

### Test Example 2

Microporous membrane of Test Example 2 was produced in the same way as in Test Example 1 except that organosilicone particles (P-2) synthesized in Part 1 were used as organosilicone particles.

### Test Example 3

Microporous membrane of Test Example 3 was produced in the same way as in Test Example 1 except that organosilicone particles (P-3) synthesized in Part 1 were used as organosilicone particles.

### Test Example 4

Microporous membrane of Test Example 4 was produced in the same way as in Test Example 1 except that organosilicone particles (P-4) synthesized in Part 1 were used as organosilicone particles.

### Test Example 5

Microporous membrane of Test Example 5 was produced in the same way as in Test Example 1 except that organosilicone particles (P-5) synthesized in Part 1 were used in an amount of 21.5 mass parts as organosilicone particles.

### Test Example 6

Microporous membrane of Test Example 6 was produced in the same way as in Test Example 1 except that organosilicone particles (P-6) synthesized in Part 1 were used in an amount of 3.6 mass parts as organosilicone particles.

### Comparison Example 1

Microporous membrane of Comparison Example 1 was produced in the same way as in Test Example 1 except that organosilicone particles 1 were not used.

### Comparison Example 2

Microporous membrane of Comparison Example 2 was produced in the same way as in Test Example 1 except that spherical silica particles (Seahostar KE-P10 (tradename) produced by Nippon Shokubai Co., Ltd., average diameter = 100nm) were used instead of organosilicone particles.

### Comparison Example 3

Microporous membrane of Comparison Example 3 was produced in the same way as in Test Example 1 except that spherical polymethyl methacrylate particles (Epostar MA-1002 (tradename) produced by Nippon Shokubai Co., Ltd., average diameter = 2.5µm) were used instead of organosilicone particles.

### Comparison Example 4

Microporous membrane of Comparison Example 4 was produced in the same way as in Test Example 1 except that spherical silica particles (Seahostar KE-P10 (tradename) produced by Nippon Shokubai Co., Ltd., average diameter =100nm) were used in an amount of 20.1 mass units instead of organosilicone particles.

### Part 3 (Measurement of physical characteristics of polyolefin microporous membranes)

Film thickness (µm), average throughhole diameter (nm), air resistance (sec/100cc), tension breaking strength (MPa) and thermal shrinkage rate (%) of each of the microporous membranes produced in Part 2 were measured as follows, and the results are shown together in Table 2.

Film thickness (µm): A scanning electron microscope (SEM) was used for measuring cross-sectional surface of each microporous membrane.

Average throughhole diameter (nm): Belsorp-mini ((tradename) produced by Japan Bell Co., Ltd.) was used.

Air resistance (sec/100cc): A Gurley type porosity analyzer (G-B2 (tradename) produced by Toyo Seiki Manufacturing Co.) was used for measurement according to JIS-P8117.

Tension breaking strength (MPa): An elongated test piece of width 15mm was cut from each microporous membrane and its tension breaking strength was measured according to ASTM D882. Autograph AG-A (tradename) produced by Shimadzu Corporation was used.

Thermal shrinkage rate (%): A square test piece of size 120mm x 120mm was cut from each microporous membrane and was marked at three places at intervals of 100min by an oil pen. It was sandwiched between sheets of A4 size copy paper (produced by Kokuyo) and the copy paper sheets were stapled together on a side edge by using a stapler. It was laid horizontally inside an oven at 150°C and left there for one hour. It was then cooled with air and the distances (mm) between the marks were measured. Autograph AG-A (tradename) produced by Shimadzu Corporation was used. The thermal shrinkage rate was calculated as follows from the average from the three places: Thermal shrinkage rate (%) = ((100 - Distance (mm) between marks after heating) /100(mm)) x 100.

**Table 2**

| | Organosilicone particles, etc. | | Film thickness (µm) | Average throughhole diameter (nm) | Air resistance (sec/100cc) | Tension breaking strength (MPa) | Thermal shrinkage rate (%) |
|---|---|---|---|---|---|---|---|
| | Type | Ratio (mass %) | | | | | |
| TE-1 | P-1 | 20 | 25 | 30 | 590 | 102 | 8 |
| TE-2 | P-2 | 20 | 25 | 30 | 590 | 105 | 6 |
| TE-3 | P-3 | 20 | 25 | 30 | 610 | 100 | 7 |
| TE-4 | P-4 | 20 | 30 | 45 | 690 | 98 | 10 |
| TE-5 | P-5 | 40 | 30 | 55 | 710 | 90 | 4 |
| TE-6 | P-6 | 10 | 25 | 30 | 550 | 95 | 15 |
| CE-1 | - | 0 | 25 | 30 | 610 | 13 | 70 |
| CE-2 | R-1 | 20 | 25 | 30 | 440 | 58 | 36 |
| CE-3 | R-2 | 20 | 30 | 50 | 700 | 36 | 70 |
| CE-4 | R-1 | 40 | - | - | - | - | - |

| | | | | | | | |
|---|---|---|---|---|---|---|---|
| In Table 2: TE: Test Example CE: Comparison Example P-1 - P-6: Organosilicone particles shown in Table 1 R-1: Spherical silica particles (Seahostar KE-P10 (tradename) produced by Nippon Shokubai Co., Ltd., average diameter = 100nm) R-2: Spherical polymethyl methacrylate particles (Epostar MA-1002 (tradename) produced by Nippon Shokubai Co., Ltd., average diameter = 2.5µm) | | | | | | | |

Table 2 clearly shows that microporous membranes according to this invention have average throughhole diameters and air resistance values as originally desired and are superior in mechanical strength because their tension breaking strengths are particularly high and also that they are superior in thermal stability at high temperatures because they are low in shrinkage.

### Part 4 (Production of polyolefin microporous membranes)

### Test Example 7

As material for the film for forming the surface layer, polypropylene (density = 0.90, viscosity average molecular weight = 300,000) (32 mass parts), organosilicone particles (P-1) prepared in Part 1 (9 mass parts), bis(p-ethylbenzylidene) sorbitol (2 mass parts) as nucleating agent, tetrakis-(methylene-(3'-5'-di-t-butyl-4'-hydroxyphenyl) propionate) methane (0.3 mass parts) as antioxidant, and fluidic paraffin (12 mass parts) as plasticizer were mixed together in a mixer. As material for the film for forming the intermediate layer, high density polyethylene (density = 0.95, viscosity average molecular weight = 250,000) (40 mass parts) and tetrakis-(methylene-(3'-5'-di-t-butyl-4'-hydroxyphenyl) propionate) methane (0.3 mass parts) as antioxidant were similarly mixed together. Both materials were placed in two biaxial extruder feeders with diameter 25mm and L/D = 48, and a sheet with thickness of 1.5mm was molded by supplying fluidic paraffin (48 mass parts) to the biaxial extruder for forming the film of the surface layer and fluidic paraffin (60 mass parts) to the biaxial extruder for forming the film of the intermediate layer through the respective side feeders, and extruding from the T-dies attached to the front parts of the extruders and being capable of co-extrusion (two kinds in three layers), while mixing under the condition of 200°C and 200rpm, such that the rate of extrusion from the part for forming the film of both surface layers would be 5kg/hour and the rate of extrusion from the part for forming the film of the intermediate layer would be 15kg/hour, and using a cast roll cooled to 25°C for immediately cooling and solidifying. After this sheet was drawn to 7 x 7 times by using a biaxial stretching machine under the condition of 124°C, it was soaked in methylene chloride and fluidic paraffin was extracted and removed and it was thereafter dried and drawn to 1.5 times in a transverse direction by using a tenter drawing machine under the condition of 125°C.

This drawn sheet was thereafter eased 7% in the transverse direction to carry out a heat treatment at 130°C to produce a microporous membrane comprising laminated films as a two-kind and three-layer structure with films for forming both surface layers being of the same composition and the film for forming the intermediate layer having a different composition.

### Test Example 8

Microporous membrane of Test Example 8 was produced as in Test Example 7 except that organosilicone particles (P-2) synthesized in Part 1 were used.

### Test Example 9

Microporous membrane of Test Example 9 was produced as in Test Example 7 except that organosilicone particles (P-3) synthesized in Part 1 were used.

### Test Example 10

Microporous membrane of Test Example 10 was produced as in Test Example 7 except that organosilicone particles (P-4) synthesized in Part 1 were used.

### Test Example 11

Microporous membrane of Test Example 11 was produced as in Test Example 7 except that organosilicone particles (P-5) synthesized in Part 1 (5.6 mass parts) were used.

### Test Example 12

Microporous membrane of Test Example 12 was produced as in Test Example 7 except that organosilicone particles (P-6) synthesized in Part 1 (23.2 mass parts) were used.

### Comparison Example 5

Microporous membrane of Comparison Example 5 was produced as in Test Example 7 except that organosilicone particles were not used.

### Comparison Example 6

Microporous membrane of Comparison Example 6 was produced as in Test Example 7 except that spherical silica particles (Seahostar KE-P10 (tradename) produced by Nippon Shokubai Co., Ltd., average diameter = 100nm) were used instead of organosilicone particles.

### Comparison Example 7

Microporous membrane of Comparison Example 7 was produced as in Test Example 7 except that spherical polymethyl methacrylate particles (Epostar MA-1002 (tradename) produced by Nippon Shokubai Co., Ltd., average diameter = 2.5µm) were used instead of organosilicone particles.

### Comparison Example 8

Microporous membrane of Comparison Example 68 was produced as in Test Example 7 except that spherical polymethyl methacrylate particles (Epostar MA-1002 (tradename) produced by Nippon Shokubai Co., Ltd., average diameter = 2.5µm) were used in an amount of 17.2 mass parts instead of organosilicone particles.

### Part 5 Measurement of physical characteristics of polyolefin microporous membranes

Film thickness (µm), average throughhole diameter (nm), air resistance (sec/100cc), tension breaking strength (MPa) and thermal shrinkage rate (%) of each of the microporous membranes produced in Part 4 were measured as explained in Part 3. The results are shown together in Table 3.

**Table 3**

| | Organosilicone particles, etc. | | Film thickness (µm) | Average through-hole diameter (nm) | Air resistance (sec/100cc) | Tension breaking strength (MPa) | Thermal shrinkage rate (%) |
|---|---|---|---|---|---|---|---|
| | Type | Ratio (mass %) | | | | | |
| TE-7 | P-1 | 21 | 2 | 30 | 410 | 140 | 5 |
| TE-8 | P-2 | 21 | 2 | 30 | 440 | 145 | 5 |
| TE-9 | P-3 | 21 | 2 | 30 | 390 | 160 | 4 |
| TE-10 | P-4 | 21 | 3 | 45 | 490 | 120 | 9 |
| TE-11 | P-5 | 15 | 2 | 30 | 420 | 125 | 10 |
| TE-12 | P-6 | 42 | 3 | 50 | 500 | 155 | 4 |
| CE-5 | - | 0 | 2 | 30 | 440 | 60 | 31 |
| CE-6 | R-1 | 21 | 2 | 30 | 420 | 80 | 16 |
| CE-7 | R-2 | 21 | 3 | 50 | 510 | 75 | 22 |
| CE-8 | R-2 | 35 | 3 | 50 | 520 | 70 | 25 |

Table 3 clearly shows that microporous membranes according to this invention have average through-hole diameters and air resistance values as originally desired and are superior in mechanical strength because their tension breaking strengths are particularly high and also that they are superior in thermal stability at high temperatures because they have low thermal shrinkages.

## Claims

1. A polyolefin microporous membrane that is a single-layer or laminated structure comprising a film that forms a surface layer containing organosilicone particles.

2. The polyolefin microporous membrane of claim 1 wherein said organosilicone particles have an average particle diameter of 0.01 - 10 µm.

3. The polyolefin microporous membrane of claims 1 or 2 wherein said organosilicone particles have a spherical or golfball shape and comprise a polysiloxane cross-linked structure.

4. The polyolefin microporous membrane of claim 3 wherein said polysiloxane cross-linked structure comprises siloxane unit shown by formula R¹ SiO_{1.5} or siloxane unit shown by formula R¹SiO_{1.5} and siloxane units selected from the group consisting of siloxane units shown by formulas R²R³SiO and SiO₂ where R¹, R² and R³ are each an organic group having a carbon atom directly connected to a silicon atom.

5. The polyolefin microporous membrane of claim 4 wherein said polysiloxane cross-linked structure contains siloxane units R¹SiO_{1.5} and the sum of siloxane units R²R³SiO and SiO₂ at a molar ratio of 100/0 - 50/50.

6. The polyolefin microporous membrane of any of claims 1 to 5 wherein the film that forms a surface layer contains 5-60 mass % organosilicone particles.

7. The polyolefin microporous membrane of any of claims 1 to 6 wherein the film comprises at least one polyethylene, at least one polypropylene, at least one polybutylene or mixtures thereof.

8. The polyolefin microporous membrane of any of claims 1 to 7 produced by a process that includes:
a first step of melting and mixing together at least polyolefin resin, organosilocone particles and a plasticizer to obtain a melted mixture;
a second step of molding and biaxially stretching said melted mixture to obtain a stretched film; and
a third step of extracting and removing said plasticizer from said stretched film.

9. A separator for a lithium ion battery comprising the polyolefin microporous membrane of any of claims 1 to 8.
